# EUROPEAN PATENT APPLICATION

(11) **EP 1 936 857 A1**
(43) Date of publication of application: **25.06.2008**
(21) Application number: 06292024.4
(22) Date of filing: 22.12.2006
(51) Int. Cl.: H04L 7/00, H04L 7/033

(54) **System for transmitting data between transmitter and receiver modules on a channel provided with a flow control link**

(71) Applicant: STMICROELECTRONICS SA, 92120 Montrouge (FR)
(72) Inventor: Teninge, Philippe, 38610 Gihres (FR); Locatelli, Riccardo, 38000 Grenoble (FR); Coppola, Marcello, 38430 Moiraud (FR); Pieralisi, Lorenzo, 38180 Seyssins (FR); Maruccia, Giuseppe, 38000 Grenoble (FR)
(74) Representative: Delprat, Olivier

(57) **Abstract**

This system for transmitting data between a transmitter module and a receiver module on a channel provided with a flow control link in which the transmitter module and the receiver module communicate using a first control signal (*dl-flow-ctrl-fwd*) emitted by the transmitter module to the receiver module and a second control signal (*dl-flow-ctrl-bwd*) emitted by the receiver module to the transmitter module to initiate the transmitting of data, comprises means (10, 22) for synchronizing the first and second control signals.

## Description

The invention relates, in general, to the synchronization of communicating blocks in an integrated circuit.

More particularly, the invention concerns the transmission of data between a transmitter module and a receiver module using a channel provided with a flow control link for transmitting control signals used to control the transmission of data between the transmitter and receiver modules.

In addition, according to an interesting lay-out of the invention, the present invention relates to the transmission of data between communicating blocks in an electronic circuit, and, for example, in a Network-on-Chip (NoC).

In fact, most of the modern VLSI systems are built according to the so-called "System-on-Chip" (SoC) concept.

System-on-Chip functionalities are the result of the cooperation between several simple modules which are generally selected by the designer from a preexisting library.

The designer role is to map the System-on-Chip functions onto that of the modules of the library. However, effective communication and interconnection systems are needed in order to meet suitable performances for the designed SoC system, and, in particular, to provide an effective communication between the modules of the system.

As system complexity increases, on-Chip communication becomes more and more critical. And Current on-Chip communication systems tend to become complex arranged infrastructures.

In addition, it is usually predicted that, in the next few years, the system on-Chips will include hundreds of communicating blocks running at many GHz. Such systems are known as multiprocessor systems-on-Chips (MP-SoCs).

Researchers have recently proposed the so-called Network-on-Chip concept (NoC) to overcome the limitations relating to the huge efforts necessary to adequately design on-Chip communication systems, even for the MP-SoCs systems.

NoC aims at providing scalable and flexible communication architectures with suitable performances. Moreover, NoCs provide the SoC architects with a tool for designing on-Chip communication systems quickly, thus increasing productivity and reducing time to market.

The NoC is a non-centralized architecture that is intended to be physically implemented as a distributed communication infrastructure.

NoCs are nevertheless based on a packet switch communication concept and are mainly composed of three NoC modules, namely:
- a router (R),
- a Network Interface (NI), and
- a link.

The synchronization issues in a NoC architecture impose a heavy scalability limitation and solutions at architecture level ready to be industrialized in the short term future must be provided to fully enable the NoC deployment.

Nowadays, most of the NoC solutions are fully synchronous, such that all the modules have the same clock frequency and data are transferred using traditional synchronous protocols.

Distributing a same clock signal over the entire NoC structure is a big issue. As a matter of fact, a NoC structure is a distributed architecture spread on a Chip in a manner to reduce the wiring length of the links. Accordingly, distributing a same clock signal for the entire NoC structure is costly in terms of time effort or in terms of area since it needs to provide buffers to overcome phase shifting in different areas of the structure.

An alternative solution to some NoC architectures is to build asynchronous links. However, at present, asynchronous communication implies intolerable overhead in terms of wires and area, and implies latency. Moreover asynchronous design techniques are not supported by standard design industrial EDA flows.

In view of the foregoing, it is proposed according to one embodiment a system for transmitting data on a channel provided with a flow control link between a transmitter module and a receiver module in which there is no need to prescribe one clock signal only for all the integrated circuits.

According to one embodiment, it is proposed such a system in which the transmitter module and the receiver module communicate using a first control signal emitted by the transmitter module to the receiver module, and a second control signal emitted by the receiver module to the transmitter module to initiate the transmitting of data.

In addition, the system comprises means for synchronizing the first and second control signals.

According to another feature of one embodiment, said means for synchronizing the first and second control signals are adapted to synchronize the first control signal to the second control signal at the receiver module side.

The system may comprise first latch means for latching and delivering said first control signal in synchronism with the transmitter clock and second latch means for latching data issued from said first latch means and delivering said data in synchronism with the receiver clock.

For example, the first and second latch means are controlled by first and second control driving signals elaborated respectively from said transmitter and receiver clocks and respectively in synchronism with said transmitter and receiver clocks.

In one embodiment, the first and second latch means comprise means for latching the first control signal alternately in said first and second latch means.

For example, the first and second latch means are activated the one by a rising edge, and the other one by a falling edge of a corresponding driving signal.

The first latch means and the second latch means may each comprise first and second latches, for example edge triggered flip-flops.

According to yet another feature, the system may further comprise a bisynchronous memory adapted to write data in synchronism with the transmitter clock and to read data in synchronism with the receiver clock.

This memory is for example a FIFO memory.

The FIFO may be written under the control of the synchronized first control signal issued from the means for synchronizing said control signals, and may be read under the control of the second control signal.

According to yet another feature, said means for synchronizing the first and second control signals are adapted to synchronize the second control signal to said first control signal at the transmitter module side.

The system may thus further comprise third latch means for latching and delivering said second control signal in synchronism with the receiver clock and fourth latch means for latching data issued from said third latch means and delivering data in synchronism with the transmitter clock.

For example, the third and fourth latch means are controlled by third and fourth control signals, elaborated respectively from said receiver and transmitter clocks and respectively in synchronism with said receiver and transmitter clocks.

For example, the third and fourth latch means comprise means for latching the second control signal alternately in said third and fourth latch means.

These third and fourth latch means may be activated the one by a rising edge, and the other one by a falling edge of a corresponding driving signal. For example, the third and fourth latch means may comprise flip-flop latch means.

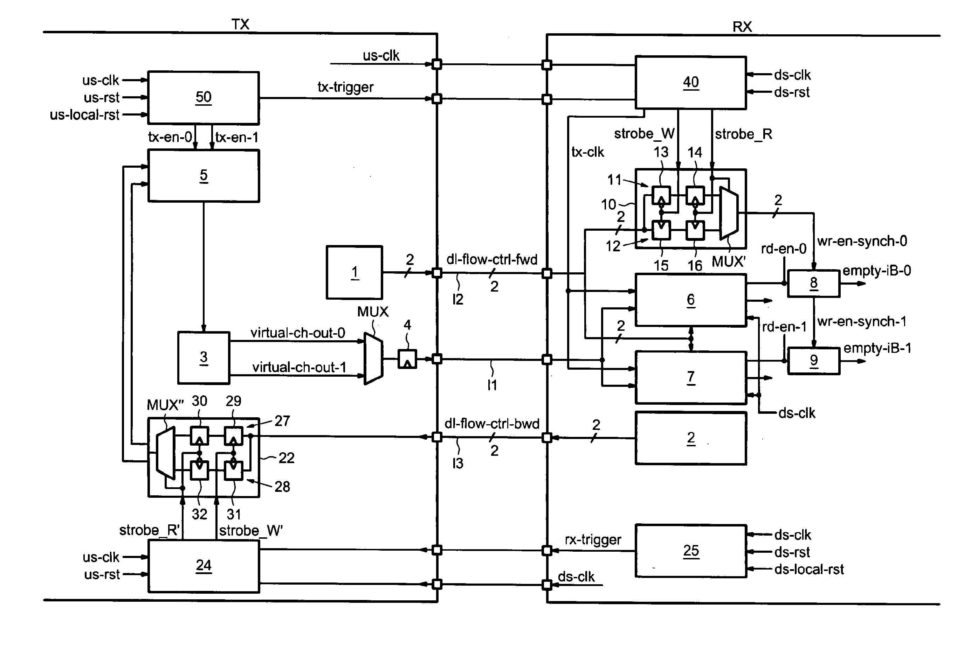

Other features and advantages will become apparent from the following description, in view of the appended drawing, which illustrates schematically the overall structure of a system for transmitting data in a NoC structure.

In the example illustrated in the attached drawing, the system is intended to transmit data between a transmitter upstream module *TX* and a receiver downstream module *RX* in a NoC architecture.

However, this system can be used to implement a transmission of data in any other types of circuits in which the data are transferred using a channel provided with a flow control link used to initiate the transfer of data from the transmitter module TX when the receiver module can accept them, namely communication circuits implementing a protocol that is used to ensure the reliability of the transfer.

However, generally speaking, the system is intended to provide communication of data between the transmitter module TX and the receiver module RX in which said modules are clocked using an upstream clock signal *us-clk* and a downstream clock signal *ds-clk,* respectively.

The system is thus intended to synchronize the control signals transferred between the modules TX and RX.

The synchronization may be carried out on the reception side. It can also be carried out on the transmission side.

For example, the system may be implemented for transmitting data in a NoC architecture and, in particular, in integrated circuits in which the communicating modules are clocked using clock signals having the same frequency but being out of phase with a constant arbitrary phase difference, which are usually called "mesochronous" systems.

As shown in the figure, transmission of data is based on the use of one unidirectional link "ℓ1" between the upstream module TX and the downstream module RX.

For example, the TX module and the RX module are each implemented within the input/output port of the router of the NoC circuit.

In addition, the communication channel between the TX and RX modules is provided with a control link having a first connection "ℓ2" for transmitting a first control data *dl-flow-ctrl-fwd* intended to indicate to the receiver module RX that the transmitter module TX is sending or ready to send a valid data and a second control connection "ℓ3" used to transfer control data *dl-flow-ctrl-bwd* from the receiver module RX to the transmitter module TX to indicate that the receiver module is accepting or ready to accept data.

As shown, the first control data *dl-flow-ctrl-fwd* are issued from a forward flow control generator 1 whereas the second control data *dl-flow-ctrl-bwd* are issued from a backward flow control generator 2 implemented respectively within the transmitter module an the receiver module.

As concerns data transferred by channel ℓ1, for example, in the embodiment disclosed, two virtual channels are implemented. Data are issued from a data generator 3, for example a finite state machine delivering two sets of output data denoted respectively *virtual-ch-out-0* and *virtual-ch-out-1* to a multiplexer MUX intended to select data to be transferred on the channel ℓ1 through a retiming stage 4.

On the transmission side, the system is further provided with a transmitter manager 5 used to control the finite state machine 3, in particular to enable, or, on the contrary, disable, each virtual channel to transmit or not data to the receiver module RX. In particular, the virtual channels are each disable during synchronization of the control signals *dl-flow-ctrl-fwd* and *dl-flow-ctrl-bwd.*

On the reception side, the system is provided with two bisynchronous input buffers 6 and 7 in order to facilitate clock domain boundary. Each input buffer 6 and 7 is constituted by a FIFO memory in which data are written using the upstream clock signal *us-clk* at the transmission side and read using the downstream clock signal *ds-clk* at the reception side.

Two empty signal generators 8 and 9 are respectively associated with the buffers 6 and 7 to generate corresponding empty signals *empty-iB-0* and *empty-iB-1* indicating that the corresponding input buffer 6 or 7 is empty, to enable writing of data under the control of the backward flow control generator 2.

According to a feature of the invention, the first control signal *dl-flow-ctrl-fwd* is used to detect whether the input buffers 6 and 7 still have place to store data.

However, the receiver module RX contains a proper logic that is used to synchronize the control signal *dl-flow-ctrl-fwd* transmitted by the transmitter module TX.

As explained below, the transmitter module TX is also provided with such logic that is used to synchronize the second control signal *dl-flow-ctrl-bwd.*

Minimum latency is introduced in the round trip path of the backward control signal, resulting in a minimum size for the bisynchronous input buffers.

In addition, it has been noticed that few cycles are spent for the necessary synchronization phase which occurs only after a reset sequence. During this short phase, transmit or receive of data are disable. During steady state, any critical synchronization is required, thus guaranteeing robust reliability.

On the reception side, the first control signal *dl-flow-ctrl-fwd* is synchronized onto the second control signal.

This synchronization is based on the use of a two-stage buffer 10.

As shown, this buffer 10 is associated with a control block 40 that is responsible for generating a first driving signal *strobe*_*W* and a second driving signal *strobe_R* used to control latching and delivery of data in the first stage and in the second stage of the two-stage buffer.

The driving signals are elaborated, on the one hand, from the transmission clock *us-clk* and from a trigger signal *TX-trigger* elaborated at the transmission side and, on the other hand, from the reception clock *ds-clk* and from a local downstream reset signal *ds-rst.*

As shown in the figure, the two-stage bugger 10 comprises first latch means 11 and second latch means 12 and a multiplexer MUX' used to deliver the synchronized data to the empty signal generator 8.

Each latch means comprises first and second latches, respectively 13 and 14, on the one hand, and 15 and 16, on the other hand.

More particularly, the first latch means 11 comprises a first latch 13 which is active on the rising edge of the first driving signal *strobe_W* and a second latch 14 which is active on the rising edge of the second driving signal *strobe_R.*

The second latch means are arranged similarly.

They comprise a first latch 15 which is active on the falling edge of the first driving signal *strobe_W* and a second latch 16 which is active on the *falling edge* of the second driving signal *strobe_R.* For example, the latches 13, 14, 15 and 16 are constituted by flip-flop latches. This is just a way to represent these latch means with *strobe_W* and *strobe_R* used as clock. The actual implementation can use flip-flop with enable where *strobe_W* and *strobe_R* are used as enable.

Accordingly, in the first stage, incoming data are store alternately in the first latches 13 and 15 of the first and second latch means, respectively. In the second stage, data issued from the first stage are store alternately in the second latches 14 and 16 of the first and second latch means, respectively.

It should be noted that the first driving signal *strobe_W* is synchronous with the transmission side clock signal *us-clk,* whereas the second driving signal *strobe*_*R* is synchronous with the downstream clock signal *ds-clk.* The first driving signal is responsible for controlling writing of the incoming control data *dl-flow-ctrl-fwd* in the first stage of the buffer 10. The second drive signal *strobe_R* is responsible for reading data from the first stage when input is stable and activates the multiplexer MUX' in order to propagate the data in synchronism with the *ds-clk* clock signal to the empty signal generator 8.

In order to generate the first drive signal *strobe_W* in synchronism with the upstream clock signal, any circuitry can be used for that purpose.

For example, edge trigger D and T flip-flop latches clocked by the *us-clk* clock signal can be used with the view to elaborate the first drive signal at a frequency for example equal to half the frequency of the *us-clk* clock signal. However, a delay gate may in addition be provided in order to provide a delay in the first driving signal corresponding at least to the set-up time of the latch means.

In addition, to elaborate the second drive signal *strobe_R,* any kind of appropriate circuitry can also be used. For example, D flip-flop and T flip-flop latches clocked by the reception side clock signal *ds-clk* can be used to elaborate the second driving signal, for example at a frequency equal to half the frequency of the *ds-clk* clock signal.

The first control signal *dl-flow-ctrl-fwd* received from the link ℓ1, and synchronous with the upstream clock signal *us-clk* is directly used in the bisynchronous input buffers 6 and 7 to enable the writing of the valid data.

The synchronized first control signal, in synchronism with the downstream clock signal is used to control the full or empty state of the buffers 6 and 7 by means of the empty signal generator 8 in a known manner.

As previously indicated, driving signal *strobe_W* and *strobe_R* are elaborated by the control block 40 in particular from the upstream clock signal *us-clk* and from the trigger signal *TX-trigger* elaborated at the transmission side.

For that purpose, the transmitter module is provided with a synchronization block 50 responsible to drive the trigger signal *TX-trigger,* which is a pulse used in the upstream interface for the initialization step. It is generated from the upstream clock signal *us-clk,* from an upstream reset signal *us-rst* and from a reset local signal *us-local-rst.*

The synchronization block 50 provides the transmitter manager 5 with transmit driving signals *TX-en-0* and *TX-en-1* in order to disable the virtual channels when the trigger signal *TX-trigger* is pulsed.

Besides, the system may further be provided with means to synchronize the second drive signal *dl-flow-ctrl-bwd* onto the upstream clock signal. The thus synchronized second drive signal is used in the transmitter manager module 5 to enable or disable sending of data at the output channel stage by controlling the finite state machine 3.

This synchronization is based on the use of a two-stage buffer structure 22 which is identical to the structure 10 at the reception side, and which is written by the receiver module RX and read by the transmitter module TX.

This buffer structure 22 is associated with a control block 24 that is responsible for generating third and fourth driving signals strobe_R' and strobe_W' from the local transmission clock *us-clk* and from an upstream reset signal *us-rst,* on the one hand, and from the local reception clock *ds-clk* and from a trigger signal *RX-trigger,* on the other end, said trigger signal being generated at the reception side by a synchronization module 25 identical to the synchronization module 20, from the downstream clock signal *ds-clk,* from a downstream reset signal *ds-rst* and from a local downstream reset signal *ds-local-rst.*

The driving signals *strobe_R'* and *strobe_W'* are generated such that they are synchronous with the upstream clock signal *us-clk* and downstream clock signal *ds-clk,* respectively. As previously indicated, such a control block 24 can be implemented in a known manner. For example, D and T flip-flops clocked by the upstream clock signal and by the downstream clock signal, respectively, can be used for that purpose.

As concerns the two-stage buffer 22, this block is identical to the module 10 previously disclosed.

It thus comprises first latch means 27 and second latch means 28, and a multiplexer MUX" used to deliver the synchronized data to the transmitter manager 5.

Each latch means comprises first and second latches, respectively 29 and 30, on the one hand, and 31 and 32, on the other hand.

More particularly, the first latch means 27 comprises a first latch 29 which is active on the rising edge of the driving signal *strobe_W'* and a second latch 30 which is active on the rising edge of the *strobe_R'* driving signal.

The second latch means are similarly arranged.

They comprise a first latch 31 which is active on the falling edge of the *strobe_W'* driving signal and a second latch 32 which is active on the falling edge of the *strobe_R'* driving signal. The latches 29, 30, 31 and 32 are for example, constituted by flip-flop latches.

Accordingly, the incoming control data are alternately stored in the first latches 29 and 31 of the first stage under the control of the first driving signal and then stored in the second latches of the second stage under the control of the second driving signal and are thus transmitted in synchronism with the *us-clk* clock signal.

From the foregoing, it will be understood that the system according to the embodiment disclosed allows transmission of data on a channel provided with a flow control link in which the data are transmitted when the reception side is ready to store the data. This is obtained by synchronizing a control data, transmitted by the transmitter module to the receiver module, onto the downstream clock signal.

In addition, control signals transmitted by the receiver module to the transmitter module in order to initiate the transmission of data are also synchronized, at the transmission side, onto the upstream clock signal.

Consequently, the transmission of data between communicating blocks can be successfully carried out even between different parts of an integrated communication system clocked by differing clock signals.

## Claims

1. System for transmitting data between a transmitter module (TX) and a receiver module (RX) on a channel provided with a flow control link, wherein the transmitter module and the receiver module communicate using a first control signal (*dl-flow-ctrl-fwd*) emitted by the transmitter module to the receiver module and a second control signal (*dl-flow-ctrl-bwd*) emitted by the receiver module to the transmitter module to initiate the transmitting of data, **characterized in that** it comprises means (10, 22) for synchronizing the first and second control signals.

2. System according to claim 1, **characterized in that** said means for synchronizing the first and second control signals (*dl-flow-ctrl-fwd, dl-flow-ctrl-bwd*) are adapted to synchronize the first control signal to the second control signal at the receiver module side.

3. System according to claim 1 or 2, **characterized in that** it comprises first latch means (11) for latching and delivering said first control signal (*dl-flow-ctrl-fwd*) in synchronism with a transmitter clock (u*x-clk*) and second latch means (12) for latching data issued from said first latch means and delivering said data in synchronism with a receiver clock (*ds-clk*).

4. System according to claim 3, **characterized in that** the first and second latch means are controlled by first and second control driving signals (*strobe_R, strobe_W*) elaborated respectively from said transmitter and receiver clocks and respectively in synchronism with said transmitter and receiver clocks.

5. System according to claim 3 or 4, **characterized in that** the first and second latch means comprise means for latching the first control signal (*dl-flow-ctrl-fwd*) alternately in said first and second latch means.

6. System according to claim 5, **characterized in that** the first and second latch means are activated, the one by a rising edge and the other one by the falling edge of the corresponding driving signal (*strobe_R, strobe_W*).

7. System according to any of claims 3 to 6, **characterized in that** the first latch means and second latch means each comprise first and second latches(13, 14, 15, 16).

8. System according to claim 7, **characterized in that** the first and second latches are edge triggered flip-flops.

9. System according to anyone of claims 3 to 8, **characterized in that** it further comprises a bisynchronous memory (FIFO) adapted to write data in synchronism with the transmitter clock (*us-clk*) and to read data in synchronism with the receiver clock (*ds-clk*).

10. System according to claim 9, **characterized in that** the memory is a FIFO memory.

11. System according to claim 10, **characterized in that** the FIFO memory is written under the control of the synchronized first control signal issued from the means for synchronizing said control signals and is read under the control of second control signal.

12. System according to claim 11, **characterized in that** said means for synchronizing the first and second control signals are adapted to synchronize the second control signal to said first control signal at the transmitter module side.

13. System according to claim 12, **characterized in that** it further comprises third latch means (27) for latching and delivering said second control signal in synchronism with a receiver clock (*ds-clk*) and fourth latch means (28) for latching data issued from said third latch means and delivering data in synchronism with a transmitter clock (*us-clk*).

14. System according to claim 13, **characterized in that** the third and fourth latch means are controlled by third and fourth control signals (*strobe_R', strobe_W'*) elaborated respectively from said receiver and transmitter clocks (us*-clk, ds-clk*) and respectively in synchronism with said receiver and transmitter clocks.

15. System according to claim 13 or 14, **characterized in that** the third and fourth latch means comprise means for latching the second control signal (*dl-flow-ctrl-bwd*) alternately in said third and fourth latch means.

16. System according to claim 15, **characterized in that** the third and fourth latch means are activated the one by a rising edge and the other one by the falling edge of a corresponding driving signal.

17. System according to any of claims 13 to 16, **characterized in that** the third and fourth latch means comprise flip-flops latch means.
